# EUROPÄISCHE PATENTSCHRIFT

(11) **EP 1 752 377 B1**
(45) Veröffentlichungstag und Bekanntmachung des Hinweises auf die Patenterteilung: **06.08.2008**
(21) Anmeldenummer: 06009757.3
(22) Anmeldetag: 11.05.2006
(51) Int. Cl.: B64D 13/06

(54) **Verfahren zum Betreiben eines Flugzeugsystems**
Method of operating an aircraft system
Procédé de mise en oeuvre d'un système d'aéronef

(30) Priorität: 08.08.2005 DE 102005037285
(43) Veröffentlichungstag der Anmeldung: 14.02.2007
(73) Patentinhaber: Liebherr-Aerospace Lindenberg GmbH, 88161 Lindenberg/Allgäu (DE)
(72) Erfinder: Kresser, Hubert, 88260 Argenbühl (DE); Hirschmann, Markus, 88214 Ravensburg (DE); Sauterleute, Alfred, 88178 Heimenkirch (DE)
(74) Vertreter: Herrmann, Uwe

(56) Entgegenhaltungen:
- EP-A- 1 527 994
- EP-A2- 1 283 165
- FR-A- 1 375 757
- FR-A- 2 829 466
- US-A- 4 262 495
- US-A- 4 546 939
- US-A1- 2004 000 353

## Beschreibung

Die Erfindung betrifft ein Verfahren zum Betreiben eines Flugzeugsystems, insbesondere zum Zwecke der Frischluftversorgung, Klimatisierung und Bedruckung einer Flugzeugkabine, das eine erste Druckluftquelle aufweist, die durch einen ersten Verdichter gebildet wird, der mit Umgebungsluft, Stauluft und/oder vorverdichteter Luft beaufschlagt wird und der mittels wenigstens eines Motors und/oder wenigstens einer Turbine angetrieben wird, und dessen Auslass unmittelbar oder mittelbar mit der Flugzeugkabine in Verbindung steht, und das wenigstens eine zweite Druckluftquelle aufweist, deren Auslass unmittelbar oder mittelbar mit der Flugzeugkabine verbindbar ist.

Flugzeugklimaanlagen, die mit Umgebungsluft betriebene Verdichter aufweisen, sind in unterschiedlichen Ausführungsformen bekannt. Aus der WO 2005/030583 A1 ist eine Flugzeugklimaanlage bekannt, die drei in einem Stauluftkanal befindliche Wärmetauscher aufweist, die zur Erzielung unterschiedlicher Kühlleistungen und somit unterschiedlicher Kühlung der verdichteten Luft in unterschiedlicher Weise verschaltet werden können.

Aus der DE 102 34 968 A1 ist eine Flugzeugklimaanlage bekannt, bei der ein vorgekühlter Zapfluftstrom mit einem verdichteten und vorgekühlten Umgebungsluftstrom zu einem Mischluftstrom zusammengeführt wird, der dann geeigneten Mitteln zum Entfeuchten dieses Mischluftstromes zugeführt wird. Die Mittel zum Entfeuchten des Mischluftstromes bestehen aus einer kombinierten Verdampfer/Kondensatoreinheit, durch die die beiden im Mischpunkt gemischten Luftströme unter Vergrößerung der in diesen enthaltenen Tröpfchen geleitet werden. Aus der DE 103 50 541 A1 ist eine weitere Flugzeugklimaanlage bekannt, die ohne Zapfluft betrieben wird und deren Verdichter mit Stau- oder Umgebungsluft beaufschlagt werden und mittels Motoren angetrieben werden.

Die US 4,262,594 betrifft ein Klimatisierungssystem für eine Flugzeugkabine, das für die Bedruckung und Rezirkulation der Kabinnenluft geeignet ist. Dieses System weist eine erste Druckluftquelle auf, die mit Umgebungsluft, Stauluft oder vorverdichteter Luft beaufschlagt wird. Die Druckluftquelle wird dabei von einem Motor oder einer Turbine angetrieben und steht mit der Flugzeugkabine über einen zwischengeschalteten Wasserabscheider in Verbindung. Ebenso ist eine zuschaltbare zweite Druckluftquelle vorgesehen.

Bei mit Umgebungsluft beaufschlagten Verdichtern besteht ein Problem darin, dass die Umgebungsbedingungen, insbesondere der Druck der Verdichtereinlassluft in Abhängigkeit von der Flughöhe stark variieren. Daraus ergibt sich ein großer geforderter Betriebsbereich, der von einem Verdichter in effizienter Weise nicht komplett abgedeckt werden kann.

Es ist daher die Aufgabe der Erfindung ein Verfahren zum Betreiben einer Flugzeugklimaanlage der eingangs genannten Art dahingehend weiterzubilden, dass die Bedruckung, Temperaturregelung und Frischluftversorgung einer Flugzeugkabine unabhängig von der Flughöhe in effizienter Weise sichergestellt ist.

Diese Aufgabe wird durch ein Verfahren mit den Merkmalen des Anspruchs 1 gelöst. Danach ist vorgesehen, dass in einem ersten Betriebsmodus nur die erste Druckluftquelle mit der Flugzeugkabine in Verbindung steht und dass in einem zweiten Betriebsmodus sowohl die erste als auch die zweite Druckluftquelle mit der Flugzeugkabine in Verbindung steht. Die Wahl des Betriebsmodus hängt von dem Druck der Umgebungsluft derart ab, dass bei hohem Druck der Umgebungsluft der erste Betriebsmodus und bei demgegenüber geringerem Druck der Umgebungsluft der zweite Betriebsmodus eingestellt wird. Das erfindungsgemäße Verfahren arbeitet somit in zwei oder mehr als zwei Betriebsmodi, die hauptsächlich von der Flughöhe und somit von dem Druck der Umgebungsluft abhängen.

In dem ersten Betriebsmodus wird die Luftversorgung nur mit dem genannten ersten Verdichter bewerkstelligt, bei dem es sich beispielsweise um einen einstufigen oder auch mehrstufigen Verdichter handeln kann. Dieser Verdichter gewährleistet die Anforderungen an Bedruckung, Temperaturregelung und Frischluftversorgung im Bodenbetrieb.

In einem zweiten Betriebsmodus, das heißt bei geringeren Umgebungsdrücken, wie sie im Flug auftreten, wird der geforderte Frischluftmassenstrom von mindestens zwei Quellen zur Verfügung gestellt. Dabei handelt es sich um den genannten ersten Verdichter, der mit Umgebungsluft beaufschlagt wird und der mittels eines Motors und/oder einer Turbine angetrieben wird, sowie um eine weitere Druckluftquelle. Vorzugsweise ist vorgesehen, dass die beiden Massenströme der Druckluftquellen gemischt werden und somit der weiteren Behandlung, das heißt beispielsweise Kühlung und Entfeuchtung zugeführt werden, bevor der auf diese Weise konditionierte Mischluftstrom der Flugzeugkabine zugeführt wird.

Dabei wird von dem ersten auf den zweiten Betriebsmodus umgeschaltet, wenn die Stopfgrenze des ersten Verdichters erreicht ist oder wenn die maximale Motorleistung des ersten Verdichters erreicht ist.

Bevorzugt ist es, wenn die Luft vor dem Eintritt in die Flugzeugkabine einer Kühlung unterzogen wird, wobei die Kühlung durch wenigstens einen in einem Stauluftkanal des Flugzeugs befindlichen Stauluftwärmetauscher und/oder durch wenigstens eine Turbine erfolgt. Im ersten Betriebsmodus erfolgt die Kühlung vorzugsweise sowohl durch den wenigstens einen Stauluftwärmetauscher als auch mittels einer oder mehreren im Kühlprozess integrierten Entspannungsturbinen, wobei diese vorzugsweise auf einer Welle mit dem ersten Verdichter und dem Motor gekoppelt sind. Auf der Welle mit dem Verdichter können sich somit eine oder mehrere Turbinen befinden. Vorzugsweise wird die Kühlung mittels nur einer derartigen im Kühlprozess integrierten Maschine realisiert, die eine oder mehrere Turbinen aufweisen kann.

Die Anordnung mehrerer Entspannungsstufen, d.h. Turbinen auf einer Welle mit dem Verdichter weist den Vorteil auf, dass beispielsweise eine der Turbinen für die Kühlung und eine andere Turbine für einen anderen Zweck, beispielsweise für die Energierückgewinnung durch die Entspannung von Kabinenluft genutzt werden kann. Selbstverständlich ist ebenfalls der Fall denkbar, dass alle Turbinen der ACM für Kühlungszwecke verwendet werden. Die Nutzung der einzelnen Entspannungsstufen für unterschiedliche Zwecke kann beispielsweise von bestimmten Parametern abhängen und muß daher nicht unter allen Bedingungen identisch sein.

In dem zweiten Betriebsmodus ist vorzugsweise vorgesehen, dass die Auslassluft der ersten Druckluftquelle und zumindest ein Teil der Auslassluft der zweiten Druckluftquelle gemischt werden und der Mischluftstrom einer Kühlung unterzogen wird. Die Kühlung kann wie in dem ersten Betriebsmodus durch wenigstens einen Stauluftwärmetauscher sowie mittels wenigstens einer im Kühlprozess integrierten Entspannungsturbine realisiert werden.

Der Mischpunkt beider Ströme kann z.B. durch eine Kammer, z. B. durch eine Kammer zur Konvertierung von Ozon oder Kohlenwasserstoffen gebildet werden.

In weiterer Ausgestaltung der Erfindung ist vorgesehen, dass die Auslassluft des ersten und/oder des zweiten Verdichters bzw. der zweiten Druckluftquelle zumindest teilweise einer Strahlpumpe zugeführt wird. Diese Strahlpumpe kann beispielsweise im Stauluftkanal des Flugzeuges angeordnet sein und zur Kühlung eines Stauluftwärmetauschers und/oder zur Kühlung der die Verdichter antreibenden Motoren dienen.

Die zweite Druckluftquelle kann durch einen oder mehrere motorisierte und mit Umgebungsluft, Stauluft und/oder vorverdichteter Luft beaufschlagte ein- oder mehrstufige zweite Verdichter gebildet werden. Ebenfalls ist denkbar, dass die zweite Druckluftquelle durch Triebwerkszapfluft gebildet wird.

Die Erfindung ist nicht auf eine erste und eine zweite Druckluftquelle beschränkt. Vielmehr können beliebig viele weitere Druckluftquellen zugeschaltet werden.

In bevorzugter Ausgestaltung der Erfindung sind die erste Druckluftquelle und die wenigstens eine weitere Druckluftquelle parallel geschaltet. Es kann sich bei den Druckluftquellen somit beispielsweise um parallel geschaltete, mit Umgebungsluft beaufschlagte Verdichter handeln.

Die vorliegende Erfindung weist nicht nur den Vorteil eines effizienten Betriebs eines Flugzeugssystems insbesondere zum Zwecke der Frischluftversorgung, Klimatisierung und Bedruckung einer Flugzeugkabine auf. Ein weiterer wesentlicher Vorteil ergibt sich aus der durch die wenigstens zwei Druckluftquellen pro System basierenden Redundanz. Ist beispielsweise der Motor eines der Verdichter defekt, ist dennoch eine ausreichende Versorgung der Flugzeugkabine sowohl im Bodenbetrieb als auch im Flugbetrieb durch die andere Druckluftquelle gesichert. Eine Redundanz ergibt sich auch im Falle zweier Flugzeugsysteme bzw. zweier Flugzeugklimaanlagen, die untereinander miteinander mittels einer Leitung (cross bleed ducting) in Verbindung stehen, wie dies unten noch näher ausgeführt wird.

Die obigen Ausführungen hinsichtlich des ersten und zweiten bzw. weiterer Betriebsmodi gelten für den Normalfall. Im Fehlerfall, wie beispielsweise bei Ausfall des ersten Verdichters, können davon abweichend andere Verschaltungen vorgenommen werden. Fällt beispielsweise der erste Verdichter aus, kann vorgesehen sein, dass die Versorgung der Flugzeugkabine mittels der zweiten Druckluftquelle durchgeführt wird, auch wenn bei den herrschenden Umgebungsbedingungen an sich der erste Betriebsmodus zu wählen wäre.

In weiterer Ausgestaltung der Erfindung ist vorgesehen, dass ein den Druckluftquellen nachgeschalteter und der Kabine vorgeschalteter Wasserabscheidekreislauf sowie eine dem Wasserabscheidekreislauf nachgeschaltete Turbine vorgesehen ist und dass ein dritter Betriebsmodus vorgesehen ist, in dem sowohl die erste als auch die zweite Druckluftquelle mit der Flugzeugkabine in Verbindung stehen und in dem die verdichtete Luft in teilweisen oder vollständigen Bypass um den Wasserabscheidekreislauf und die Turbine geführt wird. Die Bereitstellung der Frischluft erfolgt in diesem Modus zunächst wie in dem ersten oder zweiten Betriebsmodus. Allerdings kann nun aufgrund der Umgebungsbedingungen in großer Flughöhe der Wasserabscheidekreislauf und die Turbinenstufe durch Öffnen eines Bypassventils zumindest teilweise gebypasst werden. Die Kühlung erfolgt in diesem Fall nun im wesentlichen über den oder die Stauluftwärmetauscher.

In weiterer Ausgestaltung der Erfindung ist vorgesehen, dass die Luft vor dem Eintritt in die Flugzeugkabine einer Kühlung unterzogen wird, wobei die Kühlung durch wenigstens einen in einem Stauluftkanal des Flugzeugs befindlichen Stauluftwärmetauscher sowie durch eine oder mehrere vollständig oder teilweise beaufschlagte Entspannungsturbinen erfolgt, die mit dem ersten Verdichter auf einer Welle sitzen. Vorzugsweise ist vorgesehen, dass die Kühlung zusätzlich zu dem oder den Stauluftwärmetauschern mittels nur einer im Kühllulftprozess integrierten ACM realisiert ist, die ihrerseits eine oder mehrere Turbinen aufweisen kann. Diese Turbine (n) ist / sind vorzugsweise auf einer Welle mit Verdichter und Motor gekoppelt.

Da die zweite bzw. die weiteren Druckluftquellen erfindungsgemäß vorzugsweise erst im Flug ab einer gewissen Höhe zugeschaltet werden, können diese am Boden, das heißt im ersten Betriebsmodus zumindest teilweise für die Forderung der Kühlluft für die Stauluftwärmetauscher eingesetzt werden.

Dabei ist denkbar, dass die Verdichterabluft, über Regel- bzw. Absperrventile, teilweise oder ausschließlich einer Strahlpumpe (Jet Pump), welche in der Gebläsekammer des Stauluftkanals integriert ist, zugeführt wird. Diese Strahlpumpe stellt den Kühlluftstrom über die Stauluftwärmetauscher sicher. Die Strahlpumpe kann mit schalldämmenden Maßnahmen ausgeführt sein, wie z. B. durch spezielle Formgebung des Strömungsquerschnittes und/oder speziellen lärmdämmenden Schichten. Grundsätzlich ist auch denkbar, die zweite Druckluftquelle auch in einem anderen als dem ersten Betriebsmodus mit einer Strahlpumpe zu verbinden.

Grundsätzlich kann auch der erste Verdichter unabhängig vom Betriebsmodus mit einer Strahlpumpe in Verbindung stehen.

Ebenfalls ist denkbar, dass zur Ansaugung von Umgebungsluft über den oder die Stauluftwärmetauscher ein Gebläserad genutzt wird, dass in dem Stauluftkanal bzw. der Gebläsekammer (Plenum) integriert ist. Das Gebläserad ist mit dem Motorverdichter auf einer Welle gekoppelt. Die bei dieser Lösung von dem mitlaufenden Verdichter geförderte Luft kann entweder an die Umgebung abgeblasen werden oder im Stauluftkanal zur Unterstützung des Fans über eine Strahlpumpe (Jet Pump) genutzt oder weiteren Verbrauchern zugeführt werden.

Auch ist es denkbar, ein oder mehrere Gebläse unabhängig von dem oder den Verdichtern anzuordnen. Es können somit ein oder mehrere Gebläse vorgesehen sein, die zur Kühlung des oder der Verdichter-Motoren und/oder des oder der Stauluftwärmetauscher eingesetzt werden und die nicht mit den Verdichtern gekoppelt sind bzw. mit diesen auf einer Welle sitzen.

Die Gebläsekammer kann Verzweigungen in der Stromführung aufweisen. Dabei kann vorgesehen sein, dass der Stauluftkanal wenigstens abschnittsweise eine oder mehrere in Strömungsrichtung verlaufende Trennwände aufweist, die den Stauluftkanal in wenigstens zwei Abschnitte teilt, wobei in dem ersten Abschnitt eine mit der zweiten Druckluftquelle in Verbindung stehende Strahlpumpe oder ein mit dem zweiten Verdichter gekoppeltes Gebläserad angeordnet ist und wobei der zweite Abschnitt für die den Stauluftkanal durchströmende Luft einen Bypass des ersten Abschnittes darstellt. In dem ersten Abschnitt wird vorzugsweise die Kühlluft der Stauluftwärmetauscher unter Bodenbedingungen gefördert. In diesem Abschnitt sind die Strahlpumpe bzw. das Gebläserad angeordnet, wobei diese gemeinsam in einem Zweig oder getrennt in benachbarten Zweigen angeordnet sein können. In dem zweiten Abschnitt wird vorzugsweise die Kühlluft der Stauluftwärmetauscher unter Flugbedingungen geleitet. Somit ergibt sich ein Bypass der Strahlpumpe bzw. des Gebläserades, wodurch sich die Durchlässigkeit erhöht. Dieser Bypass bzw. eine andere Verzweigung unterstützt den sicheren Ventilatorbetrieb, in dem eine Rezirkulationsströmung ermöglicht wird, sofern das Gebläse mit einem Verdichter gekoppelt ist.

In dem Stauluftkanal kann ein weiterer Abschnitt vorgesehen sein, in dem eine Strahlpumpe und/oder ein Gebläse zum Zwecke der Kühlung der die Verdichter antreibenden Motoren angeordnet ist.

Somit ist in weiterer Ausgestaltung der Erfindung vorgesehen, dass zum Zwecke der Kühlung eines oder mehrerer, den oder die Verdichter antreibenden Motoren eine Strahlpumpe oder ein Gebläse vorgesehen ist.

Der Zeitpunkt der Zuschaltung der parallelen Verdichter bzw. Druckluftquellen kann von verschiedenen Kriterien abhängen:
Denkbar ist die gleiche Motorgröße bei allen Verdichtern vorzusehen, was ein früheres Zuschalten der Zusatzverdichter erfordert.
Bei Zuschaltung des zweiten Verdichters bzw. der zweiten oder einer weiteren Druckluftquelle pro Pack erfolgt eine Halbierung/Reduzierung des Massenstroms für den ersten Verdichter, da der zweite Verdichter bzw. die weitere Druckluftquelle nun den fehlenden Massenstrom zur Abdeckung der geforderten Frischluftmenge fördert. Dies kann dazu führen, dass der neue Betriebspunkt zumindest für den ersten Verdichter im instabilen Bereich, links der Pumpgrenze (Surge-Linie) liegen kann. Um einen sicheren, das heißt stabilen Betrieb zu ermöglichen, können verschiedene Maßnahmen ergriffen werden:
   Möglich ist es, die Frischluftmenge für die Kabine im zweiten Betriebsmodus bzw. auch im dritten Betriebsmodus zu erhöhen. Grundsätzlich ist eine Erhöhung der Frischluftmenge auch in anderen Betriebsmodi, z.B. im ersten Betriebsmodus denkbar.

Denkbar ist ebenfalls, den Massenstrom über die Verdichterstufen durch Rezirkulation zu erhöhen, wobei in der Rezirkulationsleitung ein Ventil (Anti Surge Valve (ASV)) angeordnet sein kann. Diese Durchflusserhöhung dient nicht zur Erhöhung der Frischluftmenge, sondern nur zur Komponentensicherheit. Eine derartige Rezirkulation ist unabhängig vom Betriebsmodus denkbar, d.h. sie kann im ersten, zweiten, dritten etc. Betriebsmodus gewählt werden.

Denkbar ist ferner, dass im ersten oder zweiten Betriebsmodus die Auslassluft des ersten Verdichters und/oder der Verdichter der zweiten und/oder einer weiteren Druckluftquelle über eine Strahlpumpe über den Stauluftkanal des Flugzeuges oder weiteren Verbrauchern des Flugzeuges zugeleitet wird. Diese Betriebsweise ist im ersten oder zweiten Betriebsmodus, aber auch in anderen Betriebsmodi denkbar.

Auch dies führt für jeden beliebigen Modus zu einem Betrieb der Verdichter im stabilen Bereich.

Bei diesen weiteren Verbrauchern kann es sich beispielsweise um die Systeme OBOGS, OBIGGS, WAI (Wing Anti Ice) oder eine weitere Heizung/Kühlung handeln. Denkbar ist es ferner, die Auslassluft für den Triebwerksstart oder für den Start eines Hilfstriebwerkes (APU) zu nutzen.

Um die erforderliche Motorleistung zu limitieren, kann in Abhängigkeit von der geforderten Kühlleistung und der Luftentfeuchtung über den Wasserabscheidekreislauf die Durchlässigkeit des Packs erhöht werden. Hierzu stehen verschiedene Möglichkeiten zur Verfügung:

Denkbar ist, über einen variablen Turbinen-Leitapparat über ein Anpassung der Querschnittsfläche die erforderliche Motorleistung optimal anzupassen. Der wesentliche Auslegepunkt für die Turbinennozzle ist der Bodenfall mit maximaler Kühlleistung und hoher Luftfeuchte. Mit zunehmender Flughöhe ist eine Vergrößerung der Nozzlefläche erforderlich. Die Ansteuerung dieses Turbinen-Leitapparates kann beispielsweise elektrisch, elektro-pneumatisch oder auch rein pneumatisch erfolgen.

Die Durchlässigkeit kann weiterhin dadurch erhöht werden, dass in großer Flughöhe bei geringer Umgebungsfeuchte eine Bypassleitung geöffnet wird, die den Wasserabscheidekreislauf sowie die Turbine umgeht. Dies ist daher möglich, da bei großer Flughöhe keine Entfeuchtung mehr erforderlich ist. In dieser Bypassleitung ist das Ventil BPV angeordnet. Bei völlig geöffnetem BPV muss die geforderte Kühlleistung durch den Stauluftwärmetauscher erreicht werden, da die Turbinenstufe, aufgrund der höheren Durchlässigkeit der Bypassleitung fast komplett gebypasst wird. Falls eine höhere Kühlleistung erforderlich ist, darf das BPV nur in Regelung gehen, um zusätzliche Turbinenkühlleistung oder andere Kühlleistung zu erreichen, wodurch ein höheres Druckverhältnis der Verdichter und somit mehr Motorleistung erforderlich wird.

Weiterhin kann vorgesehen sein, dass eine gemeinsame Ansteuerungseinheit für das Ventil TCV, das in einer Leitung angeordnet ist, die den Auslass der Druckluftquellen bzw. die Mischluftleitung mit dem Auslass der Turbine verbindet, und diesen Leitapparat vorgesehen werden, wodurch für diese Ansteuerung nur ein einziger Aktuator erforderlich ist.

Am Boden und in geringer Flughöhe kann es erforderlich sein, geeignete Maßnahmen zu ergreifen, um die Heizleistung der Klimaanlage zu erhöhen. Hierfür stehen ebenfalls verschiedene Möglichkeiten zur Verfügung.

Denkbar ist, zum Zwecke der Temperaturerhöhung einen Teil der verdichteten Luft über die Verdichter rezirkulieren zu lassen, wodurch sich die Temperatur der Prozessluft erhöht und somit auch die Heizfähigkeit der Klimaanlage gesteigert wird.

Ebenfalls ist denkbar, durch ein Ventil zur Androsselung der Verdichter die Austrittstemperatur zu erhöhen und zum anderen einen Bypass der Turbinenstufe zu ermöglichen.

Des weiteren ist es möglich, den Leitapparat der Turbine über variable Änderungen der Querschnittsfläche so auszuführen, dass auch dadurch unter Bodenbedingungen die Heizfähigkeit der Klimaanlage sichergestellt wird.

Des weiteren ist es möglich, die Heizleistung dadurch zu beeinflussen, dass die Stauluftmenge verringert wird. Dies kann dadurch erfolgen, dass der Stauluftkanal mittels einer Klappe oder eines Ventils, das über einen Aktuator angesteuert wird, teilweise oder vollständig geschlossen wird. Ebenfalls ist es denkbar, die Druckluft, die die im Stauluftkanal befindliche Strahlpumpe versorgt, zu reduzieren oder abzustellen bzw. das Druckniveau und den Durchsatz zu ändern.

Eine weitere Möglichkeit besteht darin, die Leistung des im Stauluftkanal befindlichen Gebläserades anzupassen.

Die Motorkühlung kann durch Verwendung von Umgebungs- bzw. Stauluft oder mittels eines Flüssigkeits-/ oder Zweiphasen-Kühlkreislaufes realisiert werden. Gegebenenfalls ist eine eigene Strahlpumpe für den Motorkühlungskanal vorzusehen. Die Kühlung kann mittels Umgebungs- oder Stauluft erfolgen.

Der Wasserabscheiderkreislauf der Klimaanlage umfasst üblicherweise einen Reheater, einen diesem druckluftseitig nachgeschalteten Kondensor und einen diesem nachgeschalteten Wasserabscheider. Grundsätzlich kann dieser Wasserabscheidekreislauf auch ohne Reheater ausgeführt werden.

In weiterer Ausgestaltung der Erfindung ist vorgesehen, dass eine erste und eine zweite Klimaanlage angeordnet sind, die gemäß einem Verfahren nach einem der Ansprüche 1 bis 29 betrieben werden, wobei die zweite Druckluftquelle durch zwei motorisierte mit Umgebungsluft, Stauluft oder vorverdichteter Luft beaufschlagte Verdichter oder zwei andere Druckluftquellen, wie beispielsweise Triebwerkszapfluftquellen gebildet werden, wobei in dem zweiten Betriebsmodus eine der zweiten Druckluftquellen beiden Klimaanlagen zugeschaltet wird und wobei in einem weiteren Betriebsmodus die zweiten Druckluftquellen jeweils einer der beiden Klimaanlagen zugeschaltet werden. Ein derartiges Verfahren hat den Vorteil, dass die Reduzierung der Massenströme für die ersten Verdichter der Klimaanlage beim Wechsel von dem ersten auf den zweiten Betriebsmodus nicht so stark ausfällt, da der Massenstrom des zugeschalteten Verdichters bzw. der zugeschalteten Druckluftquelle zunächst auf beide Klimaanlagen aufgeteilt wird.

Dieser Effekt ist selbstverständlich auch dadurch realisierbar, dass die zweite Druckluftquelle nur durch einen motorisierten, mit Umgebungsluft, Stauluft oder vorverdichteter Luft beaufschlagten Verdichter oder nur eine Zapfluftquelle gebildet wird. Diese eine zweite Druckluftquelle kann in dem zweiten Betriebsmodus mit verminderter Leistung beiden Klimaanlagen bzw. beiden Flugzeugsystemen zugeschaltet werden, so dass Reduzierung des Massenstroms des ersten Verdichters nur verhältnismäßig gering ausfällt. In einem weiteren Betriebsmodus kann die zweite Druckluftquelle beiden Klimaanlagen mit einem demgegenüber höheren Massenstrom zugeschaltet sein.

Die Verbindung zweiter Klimaanlagen bzw. Flugzeugsysteme durch eine Verbindungsleitung führt zu einer ebenfalls redundanten Ausführung, so dass ein Fehlerfall in einer der Klimaanlagen bzw. Systeme weitgehend oder vollständig kompensiert werden kann.

Weitere Einzelheiten und Vorteile der Erfindung werden anhand eines in der Zeichnung dargestellten Ausführungsbeispiels näher erläutert. Es zeigen:
- Figur 1:: eine schematische Darstellung einer Flugzeugklimaanlage, auf die das erfindungsgemäße Verfahren angewandt wird,
- Figur 2:: eine schematische Darstellung der Flugzeugklimaanlage gemäß Figur 1 in einer besonderen Ausführungsform und
- Figur 3:: eine schematische Darstellung der Flugzeugklimaanlage zur Durchführung einer Variante des erfindungsgemäßen Verfahrens.

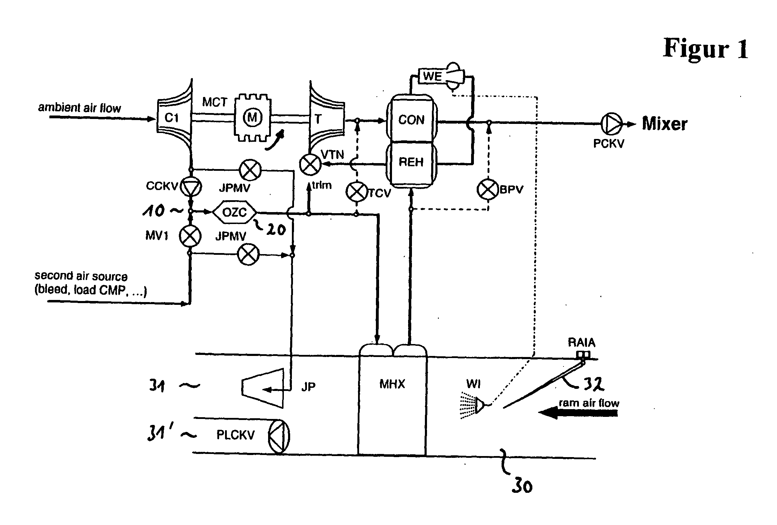

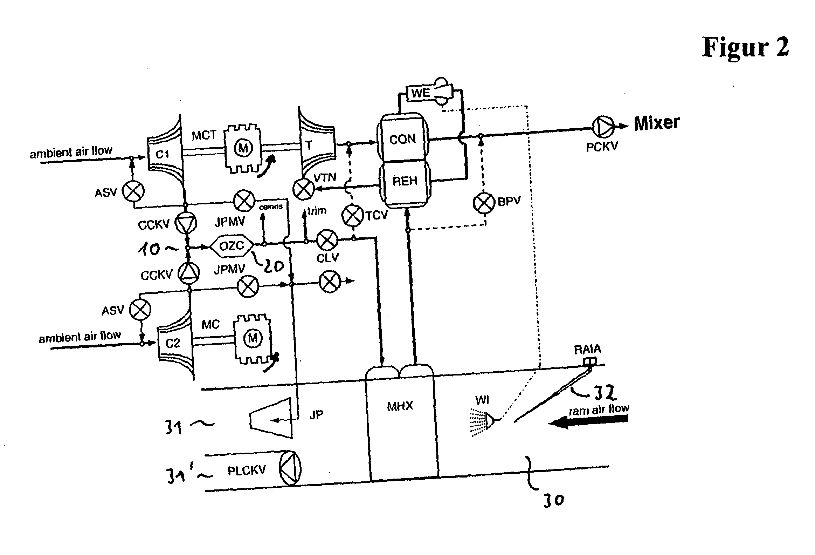

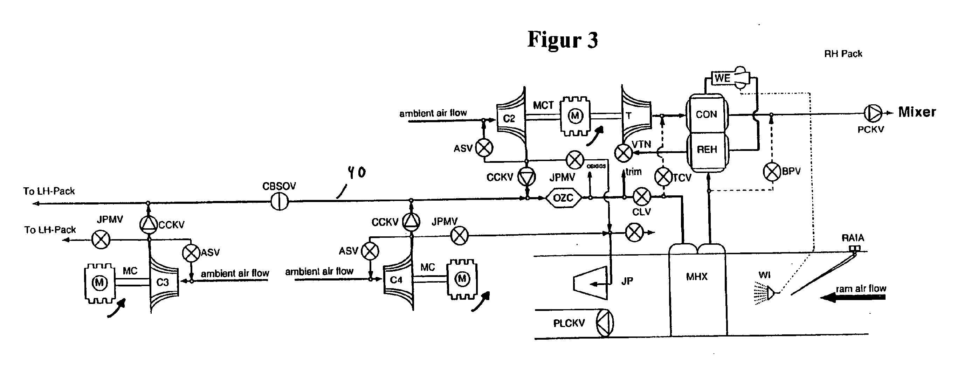

Figur 1 zeigt mit dem Bezugszeichen C1 einen mit Umgebungsluft beaufschlagten ersten Verdichter. Dieser steht mit einem Motor M und einer Entspannungsturbine T auf einer Welle in Verbindung. Die gesamte Einheit wird als MCT (Motorized Compressor Turbine) bezeichnet. Der geschwungene Pfeil im Bereich des Motors M soll dessen Kühlung beispielsweise mittels einer Strahlpumpe oder eines Gebläses andeuten, die z.B. in dem Stauluftkanal angeordnet sein können. Entsprechendes gilt für die Figuren 2 und 3.

Neben dieser Druckluftquelle ist eine weitere Druckluftquelle "second air source" vorgesehen, die je nach dem, in welchem Betriebsmodus die Anlage betrieben wird zugeschaltet wird. Diese Druckluftquelle ist mittels des Ventils MV1 (Modulating Valve 1) zu- bzw. abschaltbar oder auch teilweise zuschaltbar. Anstelle des Ventils MV1 kann auch ein Checkvalve angeordnet sein. Bei dieser zweiten Druckluftquelle kann es sich beispielsweise um einen zweiten, mit Umgebungsluft beaufschlagten motorisierten Verdichter oder auch um Zapfluft aus dem Triebwerk des Flugzeuges handeln. Die Auslassleitung des Verdichters C1 weist ein Rückschlagventil CCKV auf, das sicherstellt, dass die Durchströmung dieser Auslassleitung nicht zum Verdichter hin führt.

Die Auslassleitung des Verdichters C1 sowie der weiteren Druckluftquelle sind in einem Mischpunkt 10 miteinander verbunden. Stromabwärts des Mischpunktes befindet sich eine Kammer 20, in der beispielsweise ein Konverter für Ozon und/oder für Kohlenwasserstoffe (OZC) angeordnet sein kann.

Stromabwärts dieser Kammer befindet sich der Stauluftwärmetauscher MHX, der in dem Stauluftkanal 30 des Flugzeuges angeordnet ist, wie dies aus Figur 1 hervorgeht. Der Stauluftkanalwärmetauscher MHX steht auslassseitig mit einem aus Reheater REH, Kondensor CON und Wasserabscheider WE bestehenden Wasserabscheidekreislauf in Verbindung, wobei die Komponenten in der Reihenfolge Reheater, Kondensor und Wasserabscheider angeordnet sind. Der Wasserabscheider WE steht auslassseitig mit der kalten Seite des Reheaters REH in Verbindung. Auslassseitig steht die kalte Seite des Reheaters über einen Leitapparat VTN (Variable Turbine Nozzle) mit der Turbine T in Verbindung, das der Turbine T vorgeschaltet ist. Die kalte Turbinenauslassluft durchströmt den Kondensor CON auf seiner kalten Seite und wird dann nach passieren eines Rückschlagventils PCKV (Pack Check Valve) einer Mischkammer oder der Flugzeugkabine zugeführt.

Das in dem Wasserabscheider WE abgetrennte Wasser wird über einen Wasserinjektor WI dem Stauluftkanal 30 zugeführt, wie dies aus Figur 1 hervorgeht. Auf der Einlassseite des Stauluftkanals befindet sich eine Stauluftkanaleinlassklappe 32, die mittels des RAIA (Ram Air Inlet Actuator) in unterschiedliche Stellungen bewegt werden kann.

Stauluftseitig stromabwärts des Stauluftkanalwärmetauscher MHX ist der Stauluftkanal in zwei Abschnitte 31 und 31' geteilt. In dem oben dargestellten Abschnitt befindet sich die Strahlpumpe JP (Jet Pump), die mit den Auslassleitungen der Verdichter bzw. Druckluftquellen über Ventile JPMV (Jet Pump Modulating Valve) in Verbindung steht.

Von der Mischluftleitung erstreckt sich stromabwärts der Kammer 20 und stromaufwärts des Stauluftkanalwärmetauscher MHX eine Leitung zu der Auslassseite der Turbine T, in der ein Ventil TCV (Temperature Control Valve) angeordnet ist. Des weiteren ist eine Byplassleitung vorgesehen, die von der Auslassseite des Stauluftkanalwärmetauschers MHX zu der zu der Mischkammer führenden Leitung der Klimaanlage führt. In dieser Leitung befindet sich das Ventil BPV (Bypass Valve).

Die Anlage gemäß Figur 1 wird wie folgt betrieben. In einem ersten Betriebsmodus wird die gesamte Frischluft nur durch den Verdichter C1 bereit gestellt. Dieser ist vorzugsweise einstufig ausgeführt, auch eine mehrstufige Ausführung kommt grundsätzlich in Betracht. Dieser Verdichter dient zu Gewährleistung der Anforderungen hinsichtlich Bedruckung, Temperaturregelung und Frischluftversorgung. Die Verdichterauslassluft wird nach Passieren der Kammer 20 zunächst in dem Stauluftkanalwärmetauscher MHX gekühlt. Anschließend durchströmt diese Luft den Wasserabscheidekreislauf und wird sodann einer zweiten Kühlung in der einzigen Turbine T im Kühlprozess unterzogen. Die Turbinenleistung dient zusammen mit der Leistung des Motors M zum Antrieb des Verdichters C1. Die kalte Turbinenauslassluft dient zur Kondensation der Feuchtigkeit der Auslassluft des Stauluftkanalwärmetauschers in dem Kondensor CON.

In einem zweiten Betriebsmodus wird das Ventil MV1 oder ein Checkvalve geöffnet und der Frischluftmassenstrom wird nun durch die Auslassluft des Verdichters C1 sowie durch den Druckluftstrom der zweiten Druckluftquelle gebildet. In dem zweiten Betriebsmodus durchströmt der Mischluftstrom dieselben Komponenten wie die Auslassluft des Verdichters C1 in dem ersten Betriebsmodus.

In einem dritten Betriebsmodus erfolgt die Bereitstellung der Frischluft zunächst wie im zweiten Betriebsmodus. Allerdings kann nun aufgrund der Umgebungsbedingungen in großer Flughöhe der Wasserabscheidekreislauf und die Turbinenstufe durch Öffnen des Ventils BPV zumindest teilweise gebypasst werden. Die Kühlung im dritten Betriebsmodus erfolgt nun im wesentlichen mittels des Stauluftkanalswärmetauschers MHX.

Durch das hohe geforderte Druckverhältnis der einzelnen Verdichterstufen aufgrund einstufiger Verdichtung, erreichen diese nur einen eingeschränkten Betriebsbereich für den korrigierten Massenstrom. Um den mit steigender Flughöhe zunehmenden korrigierten Massenstrom (Volumenstrom), beeinflußt durch abnehmenden Verdichtereintrittsdruck, liefern zu können, werden wie ausgeführt abhängig von der Flughöhe zusätzliche Verdichterstufen bzw. Druckluftquellen parallel hinzugeschaltet. Die Anzahl der genutzten Umgebungsluftverdichter ist dabei nicht festgelegt, wobei zur Abdeckung des gesamten Einsatzbereiches eine Parallelschaltung von mindestens zwei Druckluftquellen pro Pack (Klimaanlage) erfolgt.

Wie dies weiter aus Figur 1 hervorgeht, kann die zweite Druckluftquelle bei geöffnetem Ventil JPMV dazu herangezogen werden, die Strahlpumpe JP zu betreiben. Dies führt dazu, dass ein Kühlluftstrom über den oder die Stauluftwärmetauscher auch im ersten Betriebsmodus gewährleistet ist. Wie dies weiter aus Figur 1 hervorgeht, kann auch die Verdichterauslassluft des Verdichters C1 über ein Ventil JPMV der Strahlpumpe zugeführt werden. Eine derartige Verfahrensweise ist insbesondere dann sinnvoll, um einen sicheren/stabilen Betrieb des Verdichters C1 zu ermöglichen. Hierdurch wird der zusätzliche Massenstrom über die Strahlpumpe JP in den Stauluftkanal geleitet oder alternativ weiteren Verbrauchern zugeführt.

Um die Durchlässigkeit der Klimaanlage zu erhöhen, kann über einen variablen Turbinen-Leitapparat die Querschnittsfläche optimal angepaßt werden. Zu diesem Zweck dient die Einheit VTN der Turbine T. Diese Einheit kann mit dem Ventil TCV, das zur Temperaturregelung dient, mittels eines gemeinsamten Aktuators angesteuert werden.

Figur 2 zeigt eine Ausgestaltung der Anordnung gemäß Figur 1, wobei die zweite Druckluftquelle durch einen Verdichter C2 gebildet wird, der von einem Motor M angetrieben wird. Eine Turbine ist nicht vorgesehen, so dass eine Anordnung MC (Motorized Compressor) erhalten wird. Von dieser Einheit können eine oder auch mehrere vorgesehen sein. Die Betriebsweise der in Figur 2 dargestellten Klimaanlage entspricht der zu Figur 1 erläuterten, so dass entsprechend Bezug genommen wird. Zusätzlich zu Figur 1 sind für die Verdichter C1 und C2 Rezirkulationsleitungen eingezeichnet, die durch ein Ventil ASV (Anti Surge Valve) verschließbar sind. Des weiteren ist in der sich von der Kammer 20 zu dem Stauluftkanalwärmetauscher MHX erstreckenden Leitung ein weiteres Ventil CLV (Compresor Load Valve) vorgesehen. Mittels Öffnen des Ventils ASV kann die Rezirkulationsluft über die Verdichter erhöht werden, wodurch ein sicherer, stabiler Betrieb der Verdichter C1, C2 ermöglicht wird. Wie oben ausgeführt, kann die Erhöhung des Verdichtermassenstroms auch über die Jet Pump Modulating Valves JPMV realisiert werden. Das in Figur 2 dargestellten Ventil CLV dient zur Androsselung der Verdichter C1, C2, durch die die Austrittstemperatur der Verdichter C1, C2 erhöht wird.

Figur 3 zeigt eine weitere Variante einer nach dem erfindungsgemäßen Verfahren betriebenen Klimaanlage. Für den Bodenbetrieb und niedrige Flughöhen ergibt sich der zu Figur 1 und Figur 2 erläuterte Betrieb der Klimaanlage. Die Anordnung gemäß Figur 3 ermöglicht die stufenweise Zuschaltung der motorisierten mit Umgebungsluft beaufschlagten Verdichter C3 und C4, wodurch die Problematik verringert wird, dass die Verdichter C1 und C2 des rechten bzw. linken Packs im instabilen Bereich betrieben werden.

Gemäß Figur 3 ist vorgesehen, dass ab einer gewissen Flughöhe nur einer der Zusatzverdichter C3 oder C4 parallel zu den Verdichtern des LH und RH Packs betrieben wird. Dies hat zur Folge, dass die Reduzierung der Massenströme für die ersten Verdichter C1 und C2 nicht so stark ausfällt und ein Betriebspunkt im stabilen Bereich (rechts der Pumpgrenze (Surge-Linie)) möglich bleibt. Um den Massenstrom des zugeschalteten Verdichters (C3 oder C4) auf beide Packs aufzuteilen, sind diese über eine Leitung 40 (Cross Bleed Ducting) miteinander verbunden. In dieser Leitung ist das Ventil CBSOV (Cross Bleed Shut Off Valve) angeordnet, mittels dessen die Leitung 40 geöffnet oder geschlossen werden kann.

Die Verbindung beider Klimaanlagen durch das Cross Bleed Ducting führt zu einer redundanten Ausführung, da jede der Klimaanlagen im Bedarfsfall mit der anderen Klimaanlage zugeordneten Druckluftquellen verbunden werden kann.

In größerer Flughöhe kann nun auch der weitere Zusatzverdichter (C3 oder C4) parallel zugeschaltet werden. Das Ventil CBSOV wird geschlossen, so dass wieder zwei separate Packs vergleichbar mit dem zweiten Betriebsmodus zu Figur 1 und Figur 2 betrieben werden.

## Patentansprüche

1. Verfahren zum Betreiben eines Flugzeugsystems, insbesondere zum Zwecke der Frischluftversorgung, Klimatisierung und Bedruckung einer Flugzeugkabine, das eine erste Druckluftquelle aufweist, die durch einen ersten Verdichter (C1) gebildet wird, der mit Umgebungsluft, Stauluft und/oder vorverdichteter Luft beaufschlagt wird und der mittels wenigstens eines Motors (M) und/oder wenigstens einer Turbine (T) angetrieben wird, und dessen Auslass unmittelbar oder mittelbar mit einer Flugzeugkabine in Verbindung steht, und das wenigstens eine zweite Druckluftquelle aufweist, deren Auslass unmittelbar oder mittelbar mit der Flugzeugkabine verbindbar ist, wobei in einem ersten Betriebsmodus nur die erste Druckluftquelle mit der Flugzeugkabine in Verbindung steht, wobei in einem zweiten Betriebsmodus sowohl die erste als auch die zweite Druckluftquelle mit der Flugzeugkabine in Verbindung steht und wobei die Wahl des Betriebsmodus von dem Druck der Umgebungsluft derart abhängt, dass bei hohem Druck der Umgebungsluft der erste Betriebsmodus und bei demgegenüber geringerem Druck der Umgebungsluft der zweite Betriebsmodus eingestellt wird,
**dadurch gekennzeichnet,**
**dass** von dem ersten auf den zweiten Betriebsmodus umgeschaltet wird, wenn die Stopfgrenze des ersten Verdichters (C1) erreicht ist und/oder wenn die maximale Motorleistung des ersten Verdichters (C1) erreicht ist.

2. Verfahren nach Anspruch 1, **dadurch gekennzeichnet, dass** die Druckluft vor dem Eintritt in die Flugzeugkabine einer Kühlung unterzogen wird, wobei die Kühlung durch einen in einem Stauluftkanal (30) des Flugzeuges befindlichen Stauluftwärmetauscher (MHX) und/oder durch wenigstens eine Turbine (T) erfolgt.

3. Verfahren nach Anspruch 2, **dadurch gekennzeichnet, dass** sich die wenigstens eine Turbine (T) mit dem ersten Verdichter (C1) auf einer Welle befindet.

4. Verfahren nach einem der vorhergehenden Ansprüche, **dadurch gekennzeichnet, dass** in dem zweiten Betriebsmodus die Auslassluft des ersten Verdichters (C1) und zumindest ein Teil der Auslassluft der zweiten Druckluftquelle gemischt werden und der Mischluftstrom einer Kühlung unterzogen wird.

5. Verfahren nach einem der vorhergehenden Ansprüche, **dadurch gekennzeichnet, dass** die Auslassluft des ersten Verdichters (C1) zumindest teilweise einer Strahlpumpe (JP) zugeführt wird.

6. Verfahren nach einem der vorhergehenden Ansprüche, **dadurch gekennzeichnet, dass** die zweite Druckluftquelle durch einen oder mehrere motorisierte und mit Umgebungsluft beaufschlagte zweite Verdichter (C2) gebildet wird.

7. Verfahren nach einem der vorhergehenden Ansprüche, **dadurch gekennzeichnet, dass** die zweite Druckluftquelle derart ausgeführt ist, dass sie Triebwerkszapfluft bereitstellt.

8. Verfahren nach einem der vorhergehenden Ansprüche, **dadurch gekennzeichnet, dass** außer der ersten und zweiten Druckluftquelle weitere Druckluftquellen vorgesehen sind, deren Auslässe unmittelbar oder mittelbar mit der Flugzeugkabine verbindbar sind.

9. Verfahren nach einem der vorhergehenden Ansprüche, **dadurch gekennzeichnet, dass** die erste Druckluftquelle und die wenigstens eine zweite Druckluftquelle parallel geschaltet sind.

10. Verfahren nach einem der vorhergehenden Ansprüche, **dadurch gekennzeichnet, dass** ein den Druckluftquellen nachgeschalteter und der Kabine vorgeschalteter Wasserabscheidekreislauf sowie eine dem Wasserabscheidekreislauf nachgeschaltete Turbine vorgesehen ist, und dass ein dritter Betriebsmodus vorgesehen ist, in dem sowohl die erste als auch die zweite Druckluftquelle mit der Flugzeugkabine in Verbindung stehen und in dem die Druckluft im teilweisen oder im vollständigen Bypass um den Wasserabscheidekreislauf und die Turbine geführt wird.

11. Verfahren nach einem der vorhergehenden Ansprüche, **dadurch gekennzeichnet, dass** die Luft vor dem Eintritt in die Flugzeugkabine einer Kühlung unterzogen wird, wobei die Kühlung durch einen oder mehrere in einem Stauluftkanal (30) des Flugzeuges befindlichen Stauluftwärmetauscher (MHX) sowie durch eine oder mehrere vollständig oder teilweise beaufschlagte Turbinen (T) erfolgt, die mit dem ersten Verdichter (C1) auf einer Welle sitzen.

12. Verfahren nach einem der vorhergehenden Ansprüche, **dadurch gekennzeichnet, dass** in dem ersten Betriebsmodus die zweite Druckluftquelle derart verschaltet ist, dass ihre Auslassluft einer in einem Stauluftkanal (30) mit wenigstens einem Stauluftwärmetauscher (MHX) angeordneten Strahlpumpe (JP) zugeführt wird.

13. Verfahren nach einem der vorhergehenden Ansprüche, **dadurch gekennzeichnet, dass** zum Zwecke der Kühlung des wenigstens einen den oder die Verdichter antreibenden Motors (M) eine Strahlpumpe (JP) und/oder ein Gebläse vorgesehen ist.

14. Verfahren nach einem der vorhergehenden Ansprüche, **dadurch gekennzeichnet, dass** die zweite Druckluftquelle durch einen oder mehrere motorisiere, mit Umgebungsluft beaufschlagte zweite Verdichter (C2) gebildet wird, wobei der wenigstens eine erste und/oder zweite Verdichter (C1, C2) mit einem Gebläserad gekoppelt ist, das in dem Stauluftkanal (30) mit wenigstens einem Stauluftwärmetauscher (MHX) angeordnet ist und das in dem ersten Betriebsmodus zur zumindest teilweisen Förderung von Luft durch den Stauluftwärmetauscher (MHX) in Betrieb ist.

15. Verfahren nach einem der vorhergehenden Ansprüche, **dadurch gekennzeichnet, dass** ein oder mehrere Gebläse zur Kühlung des oder der die Verdichter antreibenden Motoren (M) und/oder des oder der Stauluftwärmetauscher (MHX) vorgesehen sind, die nicht mit dem oder den Verdichtern gekoppelt sind.

16. Verfahren nach einem der vorhergehenden Ansprüche, **dadurch gekennzeichnet, dass** der Stauluftkanal (30) wenigstens abschnittsweise eine oder mehrere in Strömungsrichtung verlaufende Trennwände aufweist, die den Stauluftkanal (30) in wenigstens zwei Abschnitte (31, 31') teilt, wobei in dem ersten Abschnitt (31) eine mit der zweiten Druckluftquelle in Verbindung stehende Strahlpumpe (JP) oder ein mit dem zweiten Verdichter (C2) gekoppeltes Gebläserad angeordnet ist und wobei der zweite Abschnitt (31') für die den Stauluftkanal (30) durchströmende Luft einen Bypass des ersten Abschnittes (31) darstellt.

17. Verfahren nach einem der vorhergehenden Ansprüche, **dadurch gekennzeichnet, dass** in dem Stauluftkanal (30) ein weiterer Abschnitt vorgesehen ist, in dem eine Strahlpumpe und/oder ein Gebläse zum Zwecke der Motorkühlung vorgesehen ist.

18. Verfahren nach einem der vorhergehenden Ansprüche, **dadurch gekennzeichnet, dass** im zweiten Betriebsmodus die der Flugzeugkabine zugeführte Luftmasse gegenüber dem ersten Betriebsmodus erhöht wird.

19. Verfahren nach einem der vorhergehenden Ansprüche, **dadurch gekennzeichnet, dass** der Auslass des ersten Verdichters (C1) und/oder der Verdichter der zweiten und/oder einer weiteren Druckluftquelle (C2, C3, C4) mit den jeweiligen Verdichtereinlässen zum Zwecke der Erzeugung einer Rezirkulationsströmung verbunden werden.

20. Verfahren nach einem der vorhergehenden Ansprüche, **dadurch gekennzeichnet, dass** die Auslassluft des ersten Verdichters (C1) und/oder der Verdichter der zweiten und/oder einer weiteren Druckluftquelle (C2, C3, C4) über eine Strahlpumpe (JP) in den Stauluftkanal (30) des Flugzeuges oder weiteren Verbrauchern des Flugzeuges zugeleitet wird.

21. Verfahren nach Anspruch 20, **dadurch gekennzeichnet, dass** die weiteren Verbraucher aus der Gruppe OBOGS, OBIGGS, WAI (Wing Anti Ice), supplemental Cooling / Heating ausgewählt sind bzw. dass die Auslassluft zum Start eines Triebwerkes oder Hilfstriebwerkes genutzt wird.

22. Verfahren nach einem der vorhergehenden Ansprüche, **dadurch gekennzeichnet, dass** die Flugzeugklimaanlage eine Turbine (T) aufweist, die mit dem Auslass der Druckluftquellen in Verbindung steht und dass zur Erhöhung der Durchlässigkeit der Flugzeugklimaanlage eine Änderung der Querschnittsfläche der Turbine (T) mittels eines Turbinen-Leitapparates vorgenommen wird.

23. Verfahren nach Anspruch 22, **dadurch gekennzeichnet, dass** eine die Einlassleitung des Stauluftwärmetauschers (MHX) mit dem Auslass der Turbine verbindende. Leitung vorgesehen ist, in der ein Ventil (TCV: Temperature Control Valve) angeordnet ist, und dass für dieses Ventil sowie für den Turbinen-Leitapparat eine gemeinsame Ansteuereinheit vorgesehen ist.

24. Verfahren nach einem der vorhergehenden Ansprüche, **dadurch gekennzeichnet, dass** zum Zwecke der Temperaturerhöhung die Druckluft im Kreislauf über die Verdichter der ersten und/oder der weiteren Druckluftquellen (C1, C2, C3, C4) geführt wird.

25. Verfahren nach einem der vorhergehenden Ansprüche, **dadurch gekennzeichnet, dass** zum Zweck der Temperaturerhöhung eine Drosselung der Auslassleitungen der Verdichter der ersten und/oder der weiteren Druckluftquellen (C1, C2, C3, C4) erfolgt.

26. Verfahren nach einem der vorhergehenden Ansprüche, **dadurch gekennzeichnet, dass** zum Zwecke der Temperaturerhöhung die durch den Stauluftkanal (30) des Flugzeuges geführte Stauluftmenge verringert wird.

27. Verfahren nach Anspruch 26, **dadurch gekennzeichnet, dass** der Stauluftkanaleinlass mittels einer Klappe (32) oder eines Ventils zumindest teilweise verschließbar ist, die/das über einen Aktuator (RAIA) angesteuert wird.

28. Verfahren nach einem der vorhergehenden Ansprüche, **dadurch gekennzeichnet, dass** die Auslassluft des ersten Verdichters (C1) sowie der wenigstens einen weiteren Druckluftquelle in einem Mischpunkt (10) zusammengeführt werden, wobei der Mischpunkt (10) durch eine Kammer, insbesondere durch eine Kammer (20) zur Konvertierung von Ozon und/oder Kohlenwasserstoffen gebildet wird.

29. Verfahren nach einem der vorhergehenden Ansprüche, **dadurch gekennzeichnet, dass** eine erste und eine zweite Klimaanlage vorgesehen sind, die gemäß einem Verfahren nach einem der Ansprüche 1 bis 28 betrieben werden, wobei die zweite Druckluftquelle durch zwei oder mehr als zwei motorisierte, mit Umgebungsluft, Stauluft oder vorverdichteter Luft beaufschlagte Verdichter oder zwei oder mehr als zwei Triebwerkszapfluftquellen gebildet wird, wobei in dem zweiten Betriebsmodus einer der zweiten Druckluftquellen beiden Klimaanlagen zugeschaltet wird und wobei in einem weiteren Betriebsmodus die zweiten Druckluftquellen jeweils einer der beiden Klimaanlagen zugeschaltet werden.

30. Verfahren nach einem der vorhergehenden Ansprüche, **dadurch gekennzeichnet, dass** eine erste und eine zweite Klimaanlage vorgesehen sind, die gemäß einem Verfahren nach einem der Ansprüche 1 bis 28 betrieben werden, wobei die zweite Druckluftquelle durch einen motorisierten, mit Umgebungsluft, Stauluft oder vorverdichteter Luft beaufschlagten Verdichter oder eine Triebwerkszapfluftquelle gebildet wird, wobei in dem zweiten Betriebsmodus die zweite Druckluftquelle beiden Klimaanlagen mit geringerem Massenstrom zugeschaltet wird und wobei in einem weiteren Betriebsmodus die zweite Druckluftquelle beiden Klimaanlagen mit demgegenüber höherem Massenstrom zugeschaltet wird.

## Claims

1. Method for operation of an aircraft system, in particular for the purpose of fresh-air supply, air conditioning and pressurization of an aircraft cabin, which aircraft system has a first compressed-air source which is formed by a first compressor (C1) to which environmental air, ram air and/or precompressed air are/is applied and which is driven by means of at least one motor (M) and/or at least one turbine (T), and whose outlet is directly or indirectly connected to an aircraft cabin, and which has at least one second compressed-air source whose outlet can be connected directly or indirectly to the aircraft cabin, with only the first compressed-air source being connected to the aircraft cabin in a first operating mode, both the first and the second compressed-air source being connected to the aircraft cabin in a second operating mode, and with the choice of the operating mode depending on the pressure of the environmental air such that the first operating mode is selected when the environmental air pressure is high, and the second operating mode is selected when the environmental air pressure is lower than this,
**characterized**
**in that** switching takes place from the first to the second operating mode when the choke limit of the first compressor (C1) is reached and/or when the maximum motor power of the first compressor (C1) is reached.

2. Method according to Claim 1, **characterized in that** the compressed air is subjected to cooling before entering the aircraft cabin, with the cooling being carried out by means of a ram-air heat exchanger (MHX) located in a ram-air channel (30) in the aircraft, and/or by means of at least one turbine (T).

3. Method according to Claim 2, **characterized in that** the at least one turbine (T) is located on the same shaft as the first compressor (C1).

4. Method according to one of the preceding claims, **characterized in that**, in the second operating mode, the outlet air from the first compressor (C1) and at least some of the outlet air from the second compressed-air source are mixed, and the mixed-air flow is subjected to cooling.

5. Method according to one of the preceding claims, **characterized in that** at least some of the outlet air from the first compressor (C1) is supplied to a jet pump (JP).

6. Method according to one of the preceding claims, **characterized in that** the second compressed-air source is formed by one or more second compressors (C2) which is or are driven by a motor or motors and to which environmental air is applied.

7. Method according to one of the preceding claims, **characterized in that** the second compressed-air source is designed such that it produces engine bleed air.

8. Method according to one of the preceding claims, **characterized in that**, in addition to the first and the second compressed-air source, further compressed-air sources are provided, and their outlets can be connected directly or indirectly to the aircraft cabin.

9. Method according to one of the preceding claims, **characterized in that** the first compressed-air source and the at least one second compressed-air source are connected in parallel.

10. Method according to one of the preceding claims, **characterized in that** a water separation circuit, which is connected downstream from the compressed-air sources and upstream of the cabin, as well as a turbine, which is connected downstream from the water separation circuit, are provided, and **in that** a third operating mode is provided in which both the first and the second compressed-air source are connected to the aircraft cabin, and in which the compressed air partially or completely bypasses the water separation circuit and the turbine.

11. Method according to one of the preceding claims, **characterized in that**, before entering the aircraft cabin, the air is subjected to cooling, with the cooling being carried out by means of one or more ram-air heat exchangers (MHX) which are located in a ram-air channel (30) in the aircraft, and by means of one or more turbines (T) which is or are acted on completely or partially and is or are seated on the same shaft as the first compressor (C1).

12. Method according to one of the preceding claims, **characterized in that**, in the first operating mode, the second compressed-air source is switched such that its outlet air is supplied to a jet pump (JP) which is arranged in a ram-air channel (30) with at least one ram-air heat exchanger (MHX).

13. Method according to one of the preceding claims, **characterized in that** a jet pump (JP) and/or a fan are/is provided in order to cool the at least one motor (M) which drives the compressor or compressors.

14. Method according to one of the preceding claims, **characterized in that** the second compressed-air source is formed by one or more second compressors (C2) which is or are driven by a motor or motors and to which environmental air is applied, with the at least one first and/or second compressor (C1, C2) being coupled to a fan impeller which is arranged in the ram-air channel (30) with at least one ram-air heat exchanger (MHX), and which is operated in the first operating mode in order to feed air at least partially through the ram-air heat exchanger (MHX).

15. Method according to one of the preceding claims, **characterized in that** one or more fans is or are provided in order to cool the motor or motors (M) which drives or drive the compressors, and/or to cool the ram-air heat exchanger or exchangers (MHX) which is or are not coupled to the compressor or compressors.

16. Method according to one of the preceding claims, **characterized in that**, at least in places, the ram-air channel (30) has one or more separating walls which runs or run in the flow direction and divides or divide the ram-air channel (30) into at least two sections (31, 31'), with a jet pump (JP) which is connected to the second compressed-air source or a fan impeller which is coupled to the second compressor (C2) being arranged in the first section (31), and with the second section (31') representing a bypass around the first section (31) for the air flowing through the ram-air channel (30).

17. Method according to one of the preceding claims, **characterized in that** a further section is provided in the ram-air channel (30), in which a jet pump and/or a fan are/is provided for motor cooling purposes.

18. Method according to one of the preceding claims, **characterized in that**, in the second operating mode, the air mass which is supplied to the aircraft cabin is greater than that in the first operating mode.

19. Method according to one of the preceding claims, **characterized in that** the outlet of the first compressor (C1) and/or of the compressors of the second and/or a further compressed-air source (C2, C3, C4) are/is connected to the respective compressor inlets in order to produce a recirculation flow.

20. Method according to one of the preceding claims, **characterized in that** the outlet air from the first compressor (C1) and/or the compressor for the second and/or a further compressed-air source (C2, C3, C4) are/is supplied via a jet pump (JP) into the ram-air channel (30) in the aircraft or further loads in the aircraft.

21. Method according to Claim 20, **characterized in that** the further loads are selected from the group comprising OBOGS, OBIGGS, WAI (Wing Anti Ice), supplemental Cooling/Heating and/or **in that** the outlet air is used to start an engine or an auxiliary power unit.

22. Method according to one of the preceding claims, **characterized in that** the aircraft air-conditioning system has a turbine (T) which is connected to the outlet of the compressed-air sources, and **in that** the cross-sectional area of the turbine (T) is varied by means of a turbine control apparatus in order to increase the flow rate through the aircraft air-conditioning system.

23. Method according to Claim 22, **characterized in that** a line is provided which connects the inlet line of the ram-air heat exchanger (MHX) to the outlet of the turbine and in which a valve (TCV: Temperature Control Valve) is arranged, and **in that** a common control unit is provided for this valve and for the turbine control apparatus.

24. Method according to one of the preceding claims, **characterized in that**, in order to increase the temperature, the compressed air in the circuit is passed via the compressor of the first and/or the further compressed-air sources (C1, C2, C3, C4).

25. Method according to one of the preceding claims, **characterized in that**, in order to increase the temperature, the outlet lines of the compressors for the first and/or the further compressed-air sources (C1, C2, C3, C4) are restricted.

26. Method according to one of the preceding claims, **characterized in that**, in order to increase the temperature, the ram-air flow rate passed through the ram-air channel (30) in the aircraft is reduced.

27. Method according to Claim 26, **characterized in that** the ram-air channel inlet can be at least partially closed by means of a flap (32) or of a valve which is operated via an actuator (RAIA).

28. Method according to one of the preceding claims, **characterized in that** the outlet air from the first compressor (C1) and from the at least one further compressed-air source are combined at a mixing point (10), with the mixing point (10) being formed by a chamber, in particular by a chamber (20) for conversion of ozone and/or hydrocarbons.

29. Method according to one of the preceding claims, **characterized in that** a first and a second air-conditioning system are provided and are operated using a method according to one of Claims 1 to 28, with the second compressed-air source being formed by two or more compressors, which is or are driven by a motor or motors and to which environmental air, ram air or precompressed air is applied, or being formed by two or more than two engine bleed air sources with one of the two compressed-air sources being connected to both air-conditioning systems in the second operating mode, and with the second compressed-air sources each being connected to one of the two air-conditioning systems in a further operating mode.

30. Method according to one of the preceding claims, **characterized in that** a first and a second air-conditioning system are provided and are operated using a method according to one of Claims 1 to 28, with the second compressed-air source being formed by a compressor, which is driven by a motor and to which environmental air, ram air or precompressed air is applied, or by an engine bleed air source, with the second compressed-air source being connected to both air-conditioning systems with a reduced mass flow in the second operating mode, and with the second compressed-air source being connected to both air-conditioning systems with a mass flow that is greater than this in a further operating mode.

## Revendications

1. Procédé d'exploitation d'un système d'aéronef, en particulier à des fins d'alimentation en air frais, de climatisation et de pressurisation d'une cabine d'aéronef, le système présentant une première source d'air comprimé, qui est formée par un premier compresseur (C1) qui est chargé en air ambiant, air dynamique et/ou air suralimenté et qui est entraîné au moyen d'au moins un moteur (M) et/ou d'au moins une turbine (T), et dont la sortie communique directement ou indirectement avec une cabine d'aéronef, et le système présentant au moins une deuxième source d'air comprimé dont la sortie peut être reliée directement ou indirectement à la cabine d'aéronef, dans lequel, dans un premier mode de fonctionnement, seule la première source d'air comprimé communique avec la cabine d'aéronef, dans lequel, dans un deuxième mode de fonctionnement, aussi bien la première que la deuxième source d'air comprimé communiquent avec la cabine d'aéronef, et dans lequel le choix du mode de fonctionnement dépend de la pression de l'air ambiant de telle sorte qu'en cas de haute pression de l'air ambiant, le premier mode de fonctionnement est réglé, et par contre qu'en cas de basse pression de l'air ambiant, le deuxième mode de fonctionnement est réglé,
**caractérisé en ce que**
l'on passe du premier au deuxième mode de fonctionnement lorsque la ligne de blocage du premier compresseur (C1) est atteinte et/ou lorsque la puissance de moteur maximale du premier compresseur (C1) est atteinte.

2. Procédé selon la revendication 1, **caractérisé en ce que** l'air comprimé est soumis à un refroidissement avant d'entrer dans la cabine d'aéronef, dans lequel le refroidissement est effectué par un échangeur thermique d'air dynamique (MHX) qui se trouve dans un canal d'air dynamique (30) de l'aéronef et/ou par au moins une turbine (T).

3. Procédé selon la revendication 2, **caractérisé en ce que** ladite au moins une turbine (T) se trouve sur un arbre avec le premier compresseur (C1).

4. Procédé selon l'une quelconque des revendications précédentes, **caractérisé en ce que** dans le deuxième mode de fonctionnement, l'air de sortie du premier compresseur (C1) et au moins une partie de l'air de sortie de la deuxième source d'air comprimé sont mélangés et que le courant d'air mélangé est soumis à un refroidissement.

5. Procédé selon l'une quelconque des revendications précédentes, **caractérisé en ce que** l'air de sortie du premier compresseur (C1) est amené au moins en partie à un éjecteur (JP).

6. Procédé selon l'une quelconque des revendications précédentes, **caractérisé en ce que** la deuxième source d'air comprimé est formée par un ou plusieurs compresseurs (C2) motorisés et chargés en air ambiant.

7. Procédé selon l'une quelconque des revendications précédentes, **caractérisé en ce que** la deuxième source d'air comprimé est réalisée de telle sorte qu'elle fournit de l'air de prélèvement.

8. Procédé selon l'une quelconque des revendications précédentes, **caractérisé en ce qu'**en dehors des première et deuxième sources d'air comprimé, d'autres sources d'air comprimé sont prévues dont les sorties peuvent être reliées directement ou indirectement à la cabine d'aéronef.

9. Procédé selon l'une quelconque des revendications précédentes, **caractérisé en ce que** la première source d'air comprimé et ladite au moins deuxième source d'air comprimé sont connectées en parallèle.

10. Procédé selon l'une quelconque des revendications précédentes, **caractérisé en ce qu'**un circuit de purge d'eau, placé en aval des sources d'air comprimé et placé en amont de la cabine, ainsi qu'une turbine placée en aval du circuit de purge d'eau sont prévus, et **en ce qu'**un troisième mode de fonctionnement est prévu, dans lequel aussi bien la première source d'air comprimé que la deuxième source d'air comprimé communiquent avec la cabine d'aéronef et dans lequel l'air comprimé est guidé en dérivation partielle ou complète autour du circuit de purge d'eau et de la turbine.

11. Procédé selon l'une quelconque des revendications précédentes, **caractérisé en ce que** l'air est soumis à un refroidissement avant l'entrée dans la cabine d'aéronef, le refroidissement étant effectué par un ou plusieurs échangeurs thermiques d'air dynamique (MHX) se trouvant dans un canal d'air dynamique (30) de l'aéronef ainsi que par une ou plusieurs turbines (T) chargées complètement ou partiellement, qui se trouvent sur un arbre avec le premier compresseur (C1).

12. Procédé selon l'une quelconque des revendications précédentes, **caractérisé en ce que** dans le premier mode de fonctionnement, la deuxième source d'air comprimé est branchée de telle sorte que son air de sortie est amené à un éjecteur (JP) disposé dans un canal d'air dynamique (30) avec au moins un échangeur thermique d'air dynamique (MHX).

13. Procédé selon l'une quelconque des revendications précédentes, **caractérisé en ce qu'**en vue du refroidissement dudit au moins un moteur (M) entraînant le ou les compresseur(s), un éjecteur (JP) et/ou une soufflante est prévu(e).

14. Procédé selon l'une quelconque des revendications précédentes, **caractérisé en ce que** la deuxième source d'air comprimé est formée par un ou plusieurs compresseurs (C2) motorisés, chargés avec de l'air ambiant, dans lequel ledit au moins un premier et/ou le deuxième compresseur (C1, C2) est couplé à une roue de soufflante qui est disposée dans le canal d'air dynamique (30) avec au moins un échangeur thermique d'air dynamique (MHX) et qui fonctionne dans le premier mode de fonctionnement pour débiter au moins en partie de l'air à travers l'échangeur thermique d'air dynamique (MHX).

15. Procédé selon l'une quelconque des revendications précédentes, **caractérisé en ce qu'**une ou plusieurs soufflantes sont prévues pour refroidir le ou les moteurs (M) entraînant les compresseurs et/ou le ou les échangeurs thermiques d'air dynamique (MHX) qui ne sont pas couplés avec le ou les compresseurs.

16. Procédé selon l'une quelconque des revendications précédentes, **caractérisé en ce que** le canal d'air dynamique (30) présente au moins par endroits une ou plusieurs cloisons s'étendant dans la direction d'écoulement qui séparent le canal d'air dynamique (30) en au moins deux sections (31, 31'), dans lequel, dans la première section (31), un éjecteur (JP) communiquant avec la deuxième source d'air comprimé ou une roue de soufflante couplée avec le deuxième compresseur (C2) est disposé(e), et dans lequel la deuxième section (31') représente pour l'air circulant à travers le canal d'air dynamique (30) une dérivation de la première section (31).

17. Procédé selon l'une quelconque des revendications précédentes, **caractérisé en ce que** dans le canal d'air dynamique (30) une autre section est prévue, dans laquelle un éjecteur et/ou une soufflante est prévu(e) en vue de refroidir le moteur.

18. Procédé selon l'une quelconque des revendications précédentes, **caractérisé en ce que** dans le deuxième mode de fonctionnement, la masse d'air amenée à la cabine d'aéronef est augmentée par rapport au premier mode de fonctionnement.

19. Procédé selon l'une quelconque des revendications précédentes, **caractérisé en ce que** la sortie du premier compresseur (C1) et/ou la sortie des compresseurs de la deuxième et/ou d'une autre source d'air comprimé (C2, C3, C4) sont reliées aux entrées de compresseur respectives en vue de produire un écoulement de recyclage.

20. Procédé selon l'une quelconque des revendications précédentes, **caractérisé en ce que** l'air de sortie du premier compresseur (C1) et/ou des compresseurs de la deuxième et/ou d'une autre source d'air comprimé (C2, C3, C4) est amené par l'intermédiaire d'un éjecteur (JP) dans le canal d'air dynamique (30) de l'aéronef ou à d'autres récepteurs de l'aéronef.

21. Procédé selon la revendication 20, **caractérisé en ce que** les autres récepteurs sont choisis dans le groupe OBOGS, OBIGGS, WAI ("wing anti ice"), "supplemental cooling/heating", ou **en ce que** l'air de sortie est exploité pour le démarrage d'un propulseur ou d'un propulseur auxiliaire.

22. Procédé selon l'une quelconque des revendications précédentes, **caractérisé en ce que** le système de climatisation de l'aéronef présente une turbine (T) qui communique avec la sortie des sources d'air comprimé, et **en ce que** pour augmenter la perméabilité du système de climatisation de l'aéronef, une modification de la superficie de la section de la turbine (T) est effectuée au moyen d'un distributeur de turbine.

23. Procédé selon la revendication 22, **caractérisé en ce qu'**une conduite reliant la conduite d'entrée de l'échangeur thermique d'air dynamique (MHX) à la sortie de la turbine est prévue dans laquelle une vanne (TCV: vanne de régulation de température) est disposée, et **en ce que** pour cette vanne, ainsi que pour le distributeur de turbine, une unité de pilotage commune est prévue.

24. Procédé selon l'une quelconque des revendications précédentes, **caractérisé en ce qu'**en vue de l'augmentation de la température, l'air comprimé dans le circuit est dirigé à travers les compresseurs de la première et/ou des autres sources d'air comprimé (C1, C2, C3, C4).

25. Procédé selon l'une quelconque des revendications précédentes, **caractérisé en ce qu'**en vue de l'augmentation de la température, un étranglement des conduites de sortie des compresseurs de la première et/ou des autres sources d'air comprimé (C1, C2, C3, C4) a lieu.

26. Procédé selon l'une quelconque des revendications précédentes, **caractérisé en ce qu'**en vue de l'augmentation de température, la quantité d'air dynamique dirigée à travers le canal d'air dynamique (30) de l'aéronef est diminuée.

27. Procédé selon la revendication 26, **caractérisé en ce que** l'entrée de canal d'air dynamique peut être fermée au moins en partie au moyen d'un volet (32) ou d'une vanne, qui est piloté(e) par un actionneur (RAIA).

28. Procédé selon l'une quelconque des revendications précédentes, **caractérisé en ce que** l'air de sortie du premier compresseur (C1) ainsi que l'air de ladite au moins une autre source d'air comprimé sont réunis en un point de mélange (10), dans lequel le point de mélange (10) est formé par une chambre, en particulier par une chambre (20) pour convertir de l'ozone et/ou des hydrocarbures.

29. Procédé selon l'une quelconque des revendications précédentes, **caractérisé en ce qu'**un premier et un deuxième système de climatisation sont prévus, qui sont exploités selon un procédé selon l'une quelconque des revendications 1 à 28, dans lequel la deuxième source d'air comprimé est formée par deux ou plus de deux compresseurs motorisés, chargés en air ambiant, air dynamique ou air suralimenté, ou par deux ou plus de deux sources d'air de prélèvement, dans lequel, dans le deuxième mode de fonctionnement, l'une des deuxièmes sources d'air comprimé est mise en circuit avec les deux systèmes de climatisation, et dans lequel dans un autre mode de fonctionnement, les deuxièmes sources d'air comprimé sont respectivement mises en circuit avec l'un des deux systèmes de climatisation.

30. Procédé selon l'une quelconque des revendications précédentes, **caractérisé en ce qu'**un premier et un deuxième système de climatisation sont prévus qui sont exploités selon un procédé selon l'une quelconque des revendications 1 à 28, dans lequel la deuxième source d'air comprimé est formée par un compresseur motorisé, chargé en air ambiant, air dynamique ou air suralimenté, ou par une source d'air de prélèvement, dans lequel, dans le deuxième mode de fonctionnement, la deuxième source d'air comprimé est mise en circuit avec les deux systèmes de climatisation avec un faible débit massique, et dans lequel, dans un autre mode de fonctionnement, la deuxième source d'air comprimé est mise en circuit avec les deux systèmes de climatisation avec un débit massique supérieur par rapport à celui-ci.
